(19) **Europäisches Patentamt / European Patent Office / Office européen des brevets**

(11) **EP 1 788 723 A2**

(12) # EUROPEAN PATENT APPLICATION

(43) Date of publication:
**23.05.2007 Bulletin 2007/21**

(51) Int Cl.:
*H04B 7/185* (2006.01)

(21) Application number: **07004785.7**

(22) Date of filing: **09.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.05.2001 US 290264**
**03.05.2002 US 137977**

(62) Document number(s) of the earlier application(s) in accordance with Art. 76 EPC:
**02734385.4 / 1 393 471**

(71) Applicant: **Qualcomm, Incorporated**
**San Diego, CA 92121-1714 (US)**

(72) Inventor: **Robinett, Robert, L.**
**San Diego, CA 92121-1714 (US)**

(74) Representative: **Carstens, Dirk Wilhelm**
**Wagner & Geyer**
**Gewürzmühlstraße 5**
**D-80538 München (DE)**

Remarks:
This application was filed on 08 - 03 - 2007 as a divisional application to the application mentioned under INID code 62.

(54) **Multi-mode communication device with position location**

(57) The present invention provides a multiple band mobile radio (also referred to as a Wireless Communication Device (WCD) (102) capable of communicating with both a satellite communication system (108, 114) and a terrestrial communication system (120, 122). The satellite communication system can be a Low Earth Orbit (LEO) satellite communication system. The terrestrial communication system can be a Personal Communication System (PCS), or a cellular system, including either an analog or a digitally based cellular system. The WCD can concurrently receive signals from the terrestrial communication system and the satellite communication system. Also, the WCD (102, 300, 470, 500, 600) can receive signals useful for position location, such as a GPS satellite signal alone, or both GPS and satellite communication signals, simultaneously.

*FIG. 2*

EP 1 788 723 A2

**Description**

**BACKGROUND OF THE INVENTION**

*I. Field of the Invention*

The present invention relates to wireless communications, and more particularly, to a wireless device such as a wireless telephone or modem, capable of communicating with both satellite and terrestrial communication systems, and receiving signals from a satellite position locating system from which a position of the wireless device can be determined.

*II. Related Art*

There are presently many different types of radiotelephone or wireless communication systems, including different terrestrial based wireless communication systems and different satellite based wireless communication systems. The different terrestrial based wireless systems can include Personal Communications Service (PCS) and cellular systems. Examples of known cellular systems include the cellular Analog Advanced Mobile Phone System (AMPS), and the following digital cellular systems: Code Division Multiple Access (CDMA) systems; Time Division Multiple Access (TDMA) systems; and newer hybrid digital communication systems using both TDMA and CDMA technologies. A CDMA cellular system is described in the Telecommunications Industry Association/Electronic Industries Association (TIA/EIA) Standard IS-95. Combined AMPS & CDMA systems are described in TIA/EIA Standard IS-98. Other communications systems are described in the IMT-2000/UM, or International Mobile Telecommunications System 2000/Universal Mobile Telecommunications System, standards covering what are referred to as wideband CDMA (WCDMA), cdma2000 (such as cdma2000 1x or 3x standards, for example) or TD-SCDMA.

An exemplary CDMA type satellite communication system comprises a constellation of 48 Low Earth Orbit (LEO) satellites and a plurality of ground stations (also referred to as terrestrial fixed stations or gateways). The gateways connect one or more known communication systems and networks to one or more satellite user terminals through the plurality of LEO satellites. Terrestrial based communication systems linked with the gateways can include, for example, telephony ground lines coupled with the Public Switched Telephone Network (PSTN), cellular and PCS systems, dedicated optical or microwave links, or the Internet. The satellite user terminals can be mobile, portable, or fixed terminals, as desired.

Typically, each satellite user terminal can receive and transmit to multiple satellites. This provides a desired level of satellite or spatial diversity. The satellite user terminals use such satellite diversity to improve satellite communication coverage by avoiding blockage of a line-of-site between the satellite user terminal and any given satellite. In some systems, the satellites serve only as frequency translators and repeaters. They may not contain or use signal modulation or demodulation capabilities. A signal transmitted from a user terminal to a satellite is referred to as a satellite uplink signal or frequency. A signal transmitted from the satellite to the user terminal is referred to as a satellite down link signal or frequency. From the perspective of the satellite being a bent-pipe or simple repeater, those signals traversing from the gateway to user terminals are referred to as forward link (communication) signals and those signals traversing from the user terminal to a gateway are referred to as reverse link signals (as viewed from the user terminal perspective).

The satellite converts the satellite uplink frequency (user terminal reverse link) into a gateway-satellite system back-haul or forward link frequency, transmitted from the satellite to the gateway. Also, the satellite converts the satellite down link frequency to a gateway-satellite system back-haul or reverse link frequency, transmitted from the satellite to the user terminal (user terminal forward link). For example, if the user terminal down link frequency is 2500 Megahertz (MHz) and its uplink frequency is 1600 MHz, the satellite maps or translates signals at these frequencies to other desired link frequencies, such as 5100 MHz and 6900 MHz, respectively. Each satellite down link has a series or set of "beams" (or sectors) illuminating a footprint on the surface of the Earth. A typical satellite might use sixteen such beams. Sometimes multiple beams at different frequencies are used to illuminate the same given area in a single "beam" pattern, with each being referred to as a "sub-beam."

For CDMA communication systems using Pseudo-Noise (PN) or pseudo-random codes for modulation, each down link beam, and generally each satellite, uses a separate Pseudo-Noise (PN) code phase offset value for purposes of beam identification. Within each beam, orthogonal codes, such as Walsh codes, are used for beam or sub-beam channelization, creating a series of individual code channels for communicating with respect to each user terminal. In practice, the beams from one satellite form a footprint that can cover large geographical regions such as entire couples like the United States. The satellites receive the satellite uplink or reverse link communication signals from user terminals also using a series or set of beams (or sectors) in a pattern, typically sixteen. The forward and reverse link beam patterns need not be identical.

In an exemplary CDMA satellite wireless communication system, a common frequency, or set of frequencies defining the different beams, is used by each gateway transmitting to or through the satellites. Common radio frequencies allow simultaneous communication through multiple satellites to or from one gateway. Individual user terminals are separated by the use of lengthy or high chip-rate PN codes on the reverse communication signal link and orthogonal or Walsh Codes (and sub-beams) on the forward communication signal link. The high-rate PN codes and Walsh Codes are used to modulate signals transmitted from gateways and user terminal transceivers. Transmitting terminals (gateway and user terminal) may use different PN codes offset in time from one another (and/or Walsh codes), thereby producing transmitted signals that can be separately received at a receiving terminal.

Each of the gateways transmits a pilot signal having a common PN spreading code or code pair that is offset in code phase from the pilot signal of other gateways. Unique pairs of PN codes can be used to identify satellites within a particular orbital plane. Additionally, each gateway may have a unique identifying PN code and each down link beam (from a satellite to a user terminal) has a different PN code offset with respect to other down link beams for the satellite.

During system operation, a user terminal has a model of the satellite constellation and the user terminal is provided with a list of PN codes and PN code phase offsets for each satellite coming into or within view of the user terminal, or for Gateways. Moreover, an outer PN code sequence, as described in US Patent Application Serial No. 09/169,358 entitled "*Multi-Layered PN Code Spreading In A Multi-User Communications System*" by Harms et al, and incorporated herein by reference, can be used to identify specific signal sources such as gateways or satellites. This PN code can be used to derive a time and phase difference between satellites in view at any time, or having the same and/or different orbits. The user terminal is equipped with elements useful for acquiring and tracking beams from multiple satellites in multiple orbits simultaneously.

CDMA technology provides a mechanism for hand-off between satellite beams by changing PN codes used to demodulate or de-spread the received signals. Generally, this can be accomplished by using one or more codes in a set of codes, and changing the phase of the codes to match different code phase offsets used between different signal sources or beams. When more than one satellite is in view of a user terminal, the user terminal can communicate with the gateway through the more than one satellites. As a result, a call hand-off between satellites can be achieved at the gateway for the user terminal. This ability to communicate with multiple satellites gives the system satellite (also referred to as spatial) diversity. If trees, mountains or buildings block a satellite link to a user terminal, the user terminal can keep the communications link active by handing off to another satellite in view.

An exemplary satellite communication system is a global communication system with global roaming capability. Best communication results are achieved when there is a line-of-sight between a user terminal and a satellite. Preferably, the user terminal has an unobstructed view of a satellite. In cities and urban environments, such unobstructed views can be difficult to achieve. Moreover, a satellite terminal user may find it more convenient to use a radio telephone or wireless communication device, including wireless modems, inside a building.

Currently, a system user can achieve some level of mobile communication with global roaming capabilities for communication many places on the Earth using, in combination, an INMARSAT satellite terminal and a cellular phone. The INMARSAT satellite terminal is disadvantageously bulky and expensive, and fails to provide cellular interoperability. Therefore the user is required to carry a second means of communication, that is, the cellular phone, which may not be operable in many areas.

Alternative systems are available to achieve global roaming using a satellite phone. However, such phones are expensive, relatively bulky, and require a large number of communication accessories.

Therefore, there is a need for a small, inexpensive mobile radiotelephone or wireless device that can operate with a satellite system and with terrestrial PCS systems and/or cellular systems, such as a CDMA cellular system, a TDMA cellular system, or an analog cellular system.

In addition to the above-mentioned satellite and terrestrial based communication systems, there are known systems for providing a mobile terminal with mobile terminal position information. One such system is based on the Global Positioning System (GPS). The GPS can provide accurate, continuous worldwide three dimensional position information relating to a GPS receiver on the surface of the Earth. The GPS comprises 24 satellites in six 55° orbital planes. A terrestrial based GPS receiver can view a plurality, for example, at least four, GPS satellites from anywhere on the Earth, unless the views to the GPS satellites are blocked by terrestrial objects (for example, buildings, trees or mountains).

In operation, the GPS receiver receives a GPS satellite signal from each of the GPS satellites in view of the GPS receiver. The GPS receiver determines a Time-of-Arrival (TOA) of each received GPS satellite signal. Based on the TOAs, the GPS receiver determines a GPS received signal receiver-satellite transit time and corresponding receiver-satellite separation distance for each satellite. The GPS receiver triangulates a GPS receiver position on the Earth based on three receiver-satellite separation distances. In practice, the GPS receiver uses a fourth dimension (Time) to calculate its position on the Earth. For example, the GPS receiver requires GPS time. GPS time can be obtained from a fourth GPS satellite, from terrestrial CDMA radio telephone base stations, and/or from a LEO CDMA satellite system.

It is desirable to combine a terrestrial and/or satellite communication capability in a mobile transceiver with a position determining capability, so as to enable a user to communicate with terrestrial and/or satellite communication systems and to determine a user (that is, mobile transceiver) position.

It is also desirable to minimize size, weight, and power requirements, and cost with respect to such a mobile transceiver.

## SUMMARY OF THE INVENTION

The present invention provides a multiple band mobile radiotelephone (also referred to as a mobile radio and a Wireless Communication Device (WCD)) capable of communicating with both a satellite communication system and a terrestrial communication system. The satellite communication system can be a LEO satellite system. The terrestrial communication system can be a PCS and/or cellular system, including both analog and digitally based cellular systems. A cellular analog system can be AMPS. A digitally based cellular system can be a CDMA system. The WCD can concurrently receive signals from the terrestrial communication system and the satellite communication system. This is useful for receiving paging signals from the satellite communication system while communicating with the terrestrial communication system, and for satellite coverage monitoring. Also, the WCD can receive one or more GPS satellite signals alone, or both GPS and satellite communication signals, simultaneously.

The WCD includes a satellite communication transmit channel (also referred to as a satellite transmit channel) and a terrestrial communication transmit channel (also referred to as a terrestrial transmit channel). Each of these transmit channels includes an Intermediate Frequency (IF) section, a frequency up-converter or mixer, and a Radio Frequency (RF) section. The IF sections of the two transmit channels share a common transmit IF signal path including common transmit IF components.

The WCD includes a satellite communication receive channel (also referred to as a satellite receive channel), a terrestrial communication receive channel (also referred to as a terrestrial receive channel), and a GPS receive channel. Each of these receive channels includes an RF section, a frequency down-converter or mixer, and an IF section. The IF sections of these three receive sections share a common receive IF signal path including common receive IF components.

The WCD includes a first signal source to provide a first Local Oscillator (LO) reference signal to both the satellite and terrestrial communication transmit channels, the terrestrial communication receive channel, and the GPS receive channel. A second signal source provides a second LO reference signal, independent of the first LO reference signal, to the satellite communication receive channel.

The above-mentioned common transmit and common receive IF arrangements, common local oscillator source for the transmit paths, and independent satellite receive channel local oscillator, permit the WCD to be advantageously constructed as a small, portable hand-held radiotelephone. Therefore, the user of the WCD can conveniently carry a single, small radiotelephone instead of, for example, three different devices: a terrestrial cellular phone, a large expensive satellite phone for global phone coverage, and a GPS receiver.

As mentioned above, the present invention advantageously provides a small, inexpensive mobile transceiver that can operate with a satellite system and a terrestrial PCS/cellular system, such as a CDMA, TDMA or analog (for example, AMPS) cellular system.

The present invention has the advantageous feature of combining a terrestrial and/or satellite communication capability in a mobile transceiver with a position determining capability, so as to enable a user to communicate with terrestrial and/or satellite communication systems and to determine a user (that is, mobile transceiver) position.

The present invention has the advantage of minimizing cost, and minimizing size, weight, and power requirements, by sharing common signal paths and components in the mobile transceiver between different operating modes of the transceiver.

## BRIEF DESCRIPTION OF THE DRAWINGS

The foregoing and other features and advantages of the invention will be apparent from the following, more particular description of the exemplary embodiments of the invention, as illustrated in the accompanying drawings.

FIG. 1 is an illustration of an example environment in which an embodiment of a wireless communication device (WCD) of the present invention can operate.

FIG. 2 is a high level block diagram of a WCD useful for implementing the WCD of FIG. 1.

FIG. 3a is a detailed block diagram of the WCD of FIG. 2.

FIG. 3b is a detailed block diagram of a baseband processor useful for implementing the processor 310 of FIG. 3a and subsequent figures.

FIG. 4 is a block diagram of a WCD, wherein a GPS receive channel and a satellite receive channel can operate simultaneously, according to an embodiment of the invention.

FIG. 5 is a block diagram of a WCD, according to another embodiment.

FIG. 6 is a block diagram of a WCD, according to still another embodiment.

FIG. 7 is a flow chart of an example method of concurrently operating a WCD of the present invention in both a satellite communication mode and a GPS receive mode to quickly establish a GPS based position of the WCD.

## DETAILED DESCRIPTION OF THE EMBODIMENTS

### I. Overview

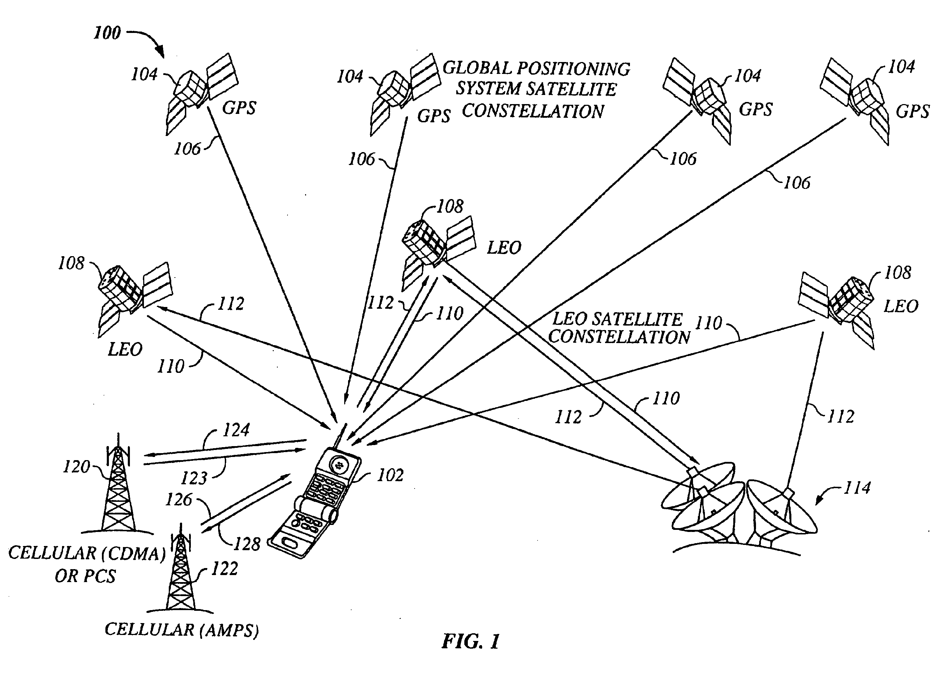

FIG. 1 is an illustration of an example environment 100 in which a wireless communication device WCD 102 of the present invention can operate. Environment 100 includes a constellation of GPS satellites 104, each of the GPS satellites occupying a substantially geosynchronous orbit. GPS satellites 104 transmit RF GPS signals 106 toward the Earth. Environment 100 also includes a constellation of communication satellites 108. The satellites 108 are part of a satellite based communication system. Each of the satellites 108 can occupy a Low Earth Orbit, and transmits a down-link RF communication signal 110 toward the Earth. Each of the satellites 108 transmits a down-link RF communication signal 110 toward the Earth. Each of the satellites can receive an up-link RF communication signal 112 from a terrestrial based transmitter compatible with the satellites 108. Satellites 108 communicate with a ground-based Gateway station 114. Gateway station 114 is linked with various communication systems and networks, such as the PSTN, the Internet, dedicated high speed data services, optical transmission lines, and so on.

Environment 100 further includes terrestrial based communication systems and networks. For example, the terrestrial based communication systems can include a first plurality of PCS and/or cellular communication cell-sites (for example, base stations and antenna support structures) represented at 120, and a second plurality of PCS and/or cellular base stations represented at 122. Base stations 120 can be associated with a terrestrial based CDMA or TDMA (or hybrid CDMA/TDMA) digital communication system. Therefore, base stations 120 can transmit a terrestrial CDMA or a TDMA type signal 123 to a mobile station or user terminal and can receive a TDMA or a CDMA signal 124 from the mobile unit or user terminal. The terrestrial signal can be formatted in accordance with IMT-2000/UMT standards (that is, International Mobile Telecommunications System 2000/Universal Mobile Telecommunications System standards). The terrestrial signal can be a wideband CDMA signal (referred to as a WCDMA signal), or a signal conforming to cdma2000 standards (such as cdma2000 1x or 3x standards, for example), or a TD-SCDMA signal.

On the other hand, base stations 122 can be associated with an analog based terrestrial communication system (such as AMPS). Therefore, base stations 122 can transmit an analog based communication signal 126 to a mobile unit and can receive an analog based communication signal 128 from the mobile unit.

Wireless communication devices each have or comprise apparatus such as, but not limited to, a wireless handset or telephone, a cellular telephone, a data transceiver, or a paging or position determination receiver, and can be hand-held, or portable as in vehicle mounted (including cars, trucks, boats, trains, and planes), as desired. However, while wireless communication devices are generally viewed as being mobile, it is also understood that the teachings of the invention are applicable to "fixed" units in some configurations. In addition, the teachings of the invention are applicable to wireless devices such as one or more data modules or modems which may be used to transfer data and/or voice traffic, and may communicate with other devices using cables or other known wireless links or connections, for example, to transfer information, commands, or audio signals. In addition, commands might be used to cause modems or modules to work in a predetermined coordinated or associated manner to transfer information over multiple communication channels. Wireless communication devices are also sometimes referred to as user terminals, mobile stations, mobile units, subscriber units, mobile radios or radiotelephones, wireless units, or simply as 'users' and 'mobiles' in some communication systems, depending on preference.

### II. Quad-Mode WCD

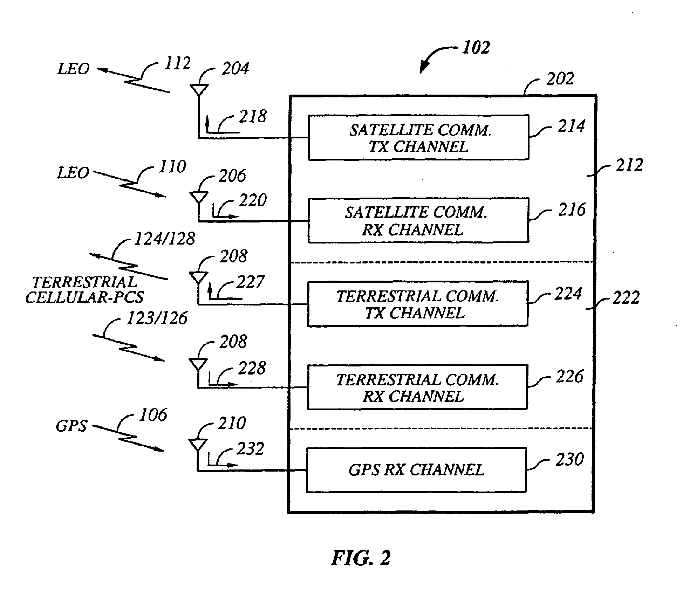

FIG. 2 is a high level block diagram of WCD 102, according to an embodiment of the present invention. WCD 102 can be configured to operate in any one, and in some circumstances, more than one, of the following modes:

1. a satellite communication mode for communicating with the satellite communication system via satellites 108;
2. a terrestrial analog communication mode for communicating with the terrestrial analog communication system;
3. a terrestrial digital communication mode for communicating with the terrestrial digital communication system; and
4. a GPS receive mode for receiving and processing GPS satellite signals and to determine a GPS based position of the WCD.

To achieve such multi-mode operation, WCD 102 includes a unique multimode transceiver 202 coupled to the following multimode transceiver antennas:

1. a transmit antenna 204 to transmit RF signal 112 to satellites 108;

2. a receive antenna 206 to receive RF signal 110 from satellites 108;

3. a common transmit/receive antenna 208, such as a whip or helical antenna, to transmit RF signals 124/128 to the associated terrestrial communication systems mentioned above, and to receive RF signals 123/126 from the terrestrial communication systems; and

4. a GPS antenna 210, such as a patch antenna, to receive RF GPS satellite signal 106 from GPS satellites 108.

Multimode transceiver 202 includes a satellite communication transceiver 212 having a satellite communication transmit channel 214 (also referred to as a satellite transmit channel 214) and a satellite communication receive channel 216 (also referred to as a satellite receive channel 216). Satellite transmit channel 214 includes baseband, IF, and RF signal processing sections (also referred as paths) to produce an RF transmit signal 218, and to provide the RF transmit signal to antenna 204. Receive antenna 206 provides an RF received signal 220 to satellite receive channel 216. Satellite receive channel 216 includes RF, IF, and baseband components to process the received signal.

Multimode transceiver 202 also includes a terrestrial mode transceiver 222 having a terrestrial communication transmit channel 224 (also referred to as a terrestrial transmit channel 224) and a terrestrial communication receive channel 226 (also referred to as terrestrial receive channel 226). Terrestrial transmit channel 224 includes RF, IF, and baseband signal processing sections to produce an RF transmit signal 227, and to provide the RF transmit signal to common antenna 208. Satellite transmit channel 214 and terrestrial transmit channel 224 share common IF and baseband signal paths in transceiver 202, as will be further described below. Common antenna 208 also provides an RF received signal 228 to terrestrial receive channel 226. Terrestrial receive channel 226 includes RF, IF, and baseband signal processing sections to process received signal 228. In another embodiment, separate receive and transmit antennas can replace the common antenna 208.

WCD 102 typically also includes a GPS receive channel 230. GPS receive channel 230 receives an RF GPS received signal 232 from GPS antenna 210, and processes the received signal using RF, IF and baseband signal processing sections. GPS receive channel 230, satellite receive channel 216, and terrestrial receive channel 226 share common IF and baseband signal paths in transceiver 202, as will be further described below.

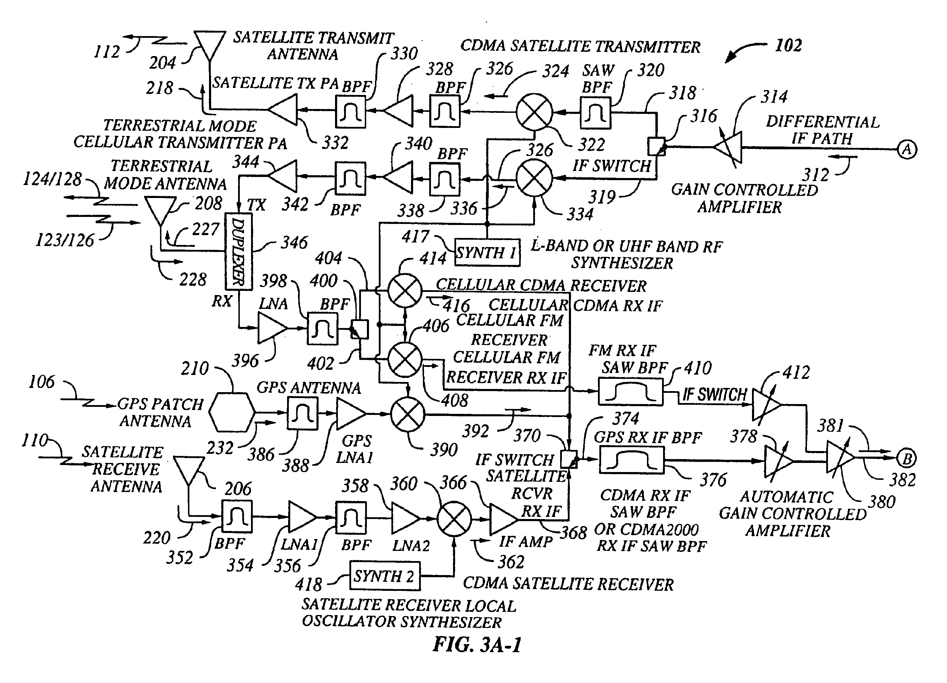

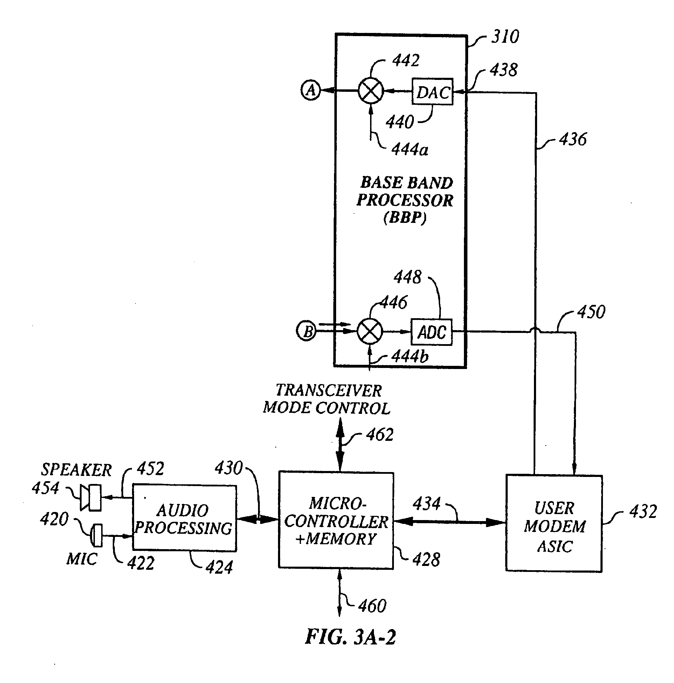

FIG. 3a is a detailed block diagram of WCD 102, according to an embodiment.

*A. Satellite Communication Transmit Channel*

WCD 102 includes satellite transmit channel 214 (depicted in FIG. 2) to produce RF transmit signal 112. With reference to FIG. 3a, satellite transmit channel 214 includes a baseband processor (BBP) 310 to produce an IF transmit signal 312 corresponding to RF satellite transmit signal 112. BBP 310 preferably produces IF signal 312 as a differential transmit IF signal. Also, IF signal 312 has an exemplary IF transmit frequency of 228.6 MHz. BBP 310 provides IF transmit signal 312 to a common transmit IF signal path (also referred to as a common transmit IF section) including a common IF gain controlled amplifier 314. Gain controlled amplifier 314 amplifies IF signal 312 and provides an amplified IF signal to an input of a common IF signal routing mechanism 316. AGC amplifier 314, and routing mechanism 316 are preferably, but not necessarily, differential. Routing mechanism 316 can be an IF switch to selectively route the amplified IF signal at the input of the switch to either of:

1. a satellite IF path 318 of satellite transmit channel 214; or

2. a terrestrial IF path 319 (described further below) of terrestrial transmit channel 224, based on a routing (mode) select signal (not shown) provided to the switch.

When satellite communication transmit communication is desired, switch 316 routes the amplified IF signal at the input of the switch to satellite IF path 318. Satellite IF path 318 leads to an input of an IF band pass filter (BPF) 320, which can be a Surface Acoustic Wave (SAW) filter. BPF 320 band pass filters an IF signal routed to the BPF by routing mechanism 316. BPF 320 provides an amplified, filtered IF signal to a mixer 322. Mixer 322 frequency up-converts the amplified, filtered IF signal to an RF transmit signal 324 based on a first local oscillator (LO) reference signal 326 provided to mixer 322. RF transmit signal 324 has a frequency corresponding to a satellite communication frequency transmit (WCD to satellite) band.

Mixer 322 provides RF signal 324 to an RF transmit section of satellite transmit channel 214. The RF transmit section includes the following, serially connected, RF signal processing components: a first RF BPF 326 to filter RF signal 324; an RF amplifier 328 to amplify a filtered RF signal produced by BPF 326; a second RF BPF 330 to further filter an amplified RF signal produced by RF amplifier 328; and an RF power amplifier 332 to further amplify an RF signal produced by BPF 330. The RF transmit section can have an RF gain of approximately 50 dB, or as desired for a particular application. Satellite power amplifier 332 provides power amplified RF signal 218 to satellite transmit antenna 204. Satellite transmit antenna 204 transmits RF signal 218 as RF satellite transmit signal 112.

*B. Terrestrial Communication Transmit Channel*

Terrestrial transmit channel 224 shares baseband processor 310, IF gain controlled amplifier 314, and IF signal routing mechanism 316, with satellite transmit channel 214, described above. Such IF commonality advantageously reduces transceiver cost, and space and power requirements. In the terrestrial mode, BBP 310 provides IF transmit signal 312, in this case, corresponding to terrestrial RF transmit signals 124/128, to gain controlled amplifier 314. When terrestrial transmit communication is desired, IF switch 316 routes the amplified IF signal produced by amplifier 314 to terrestrial transmit IF path 319, and thus, to a mixer 334. Similar to mixer 322, mixer 334 frequency up-converts the transmit IF signal to an RF transmit signal 336 based on LO reference signal 326 provided to the mixer. RF transmit signal 336 has a frequency corresponding to a terrestrial communication frequency transmit (WCD to base station) band.

Mixer 334 provides RF transmit signal 336 to an RF transmit section of terrestrial transmit channel 224. The RF transmit section includes the following, serially connected, RF components: a first RF BPF 338, an RF amplifier 340, a second RF BPF 342, and a power amplifier 344. RF BPFs 338 and 342 have frequency bandwidths compatible with the terrestrial transmit signals to be filtered thereby, such as analog or digital cellular, PCS, cdma2000 1x or 2x, or WCDMA signals, etc. Power amplifier 344 provides a power amplified terrestrial RF signal to an input of a duplexer 346. The RF transmit section can have an overall RF gain similar to that of the RF transmit section of satellite transmit channel 214.

Duplexer 346 includes RF transmit and receive filter sections to separate the terrestrial RF transmit and receive signals from one another. This is done because the terrestrial RF transmit and receive signals 124/128 and 123/126 are combined at common terrestrial antenna 208. Duplexer 346 provides a filtered, power amplified, terrestrial RF transmit signal (for example, RF signal 226) to common antenna 208. Duplexer 346 can be omitted in an alternative embodiment including separate terrestrial RF transmit and receive antennas.

An alternate embodiment replaces the separate satellite and terrestrial RF transmit sections with a single RF transmit path, including a single wide band RF power amplifier to amplify both terrestrial mode frequencies and satellite frequencies. However, in this embodiment, satellite and terrestrial RF filters must be switched into the single transmit path, depending on whether the satellite or terrestrial transmit mode is selected.

*C. Satellite Communication Receive Channel*

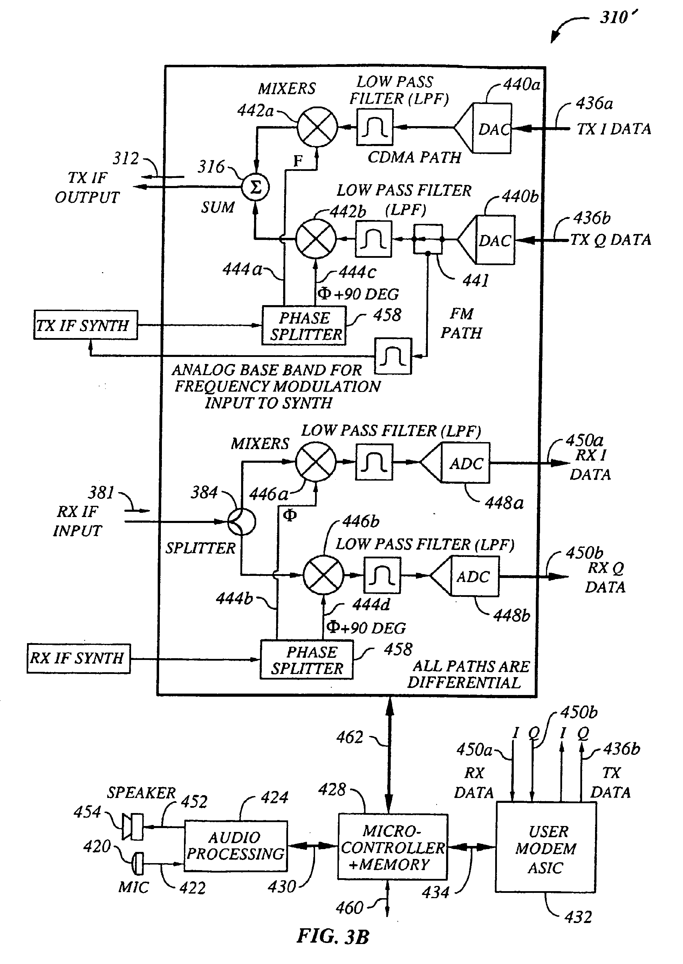

In satellite receive channel 216 (depicted at the bottom left-hand side of FIG. 3), antenna 206 provides low power received RF signal 220 to an RF section including the following serially connected, RF components: a BPF 352 to filter interference (such as image band frequencies, terrestrial signals including PCS and/or cellular signals, and transmit signal 218 produced by satellite transmit channel 214) from received RF signal 220, so as to avoid over driving of the RF section; a first low noise amplifier (LNA) 354 (having an exemplary RF gain of 25 dB) to emplify a filtered RF signal produced by BPF 352; a second RF BPF 356 to filter an amplified RF signal produced by first LNA 354; and a second LNA 358 to further amplify a filtered RF signal produced by BPF 356. Second LNA 358 provides a conditioned RF signal to an RF mixer 360.

Mixer 360 frequency down-converts the conditioned RF signal to an IF signal 362 based on an LO reference signal 364 provided to mixer 360. Received IF signal 362 can have an exemplary IF frequency of approximately 186.3 MHz. Mixer 360 provides a preferably differential IF signal to an IF amplifier 366 to amplify the IF signal. Amplifier 366 provides an amplified IF signal to a first received IF signal path 368, and thus, to a first input of an IF signal routing mechanism 370. Routing mechanism 370 includes a second input coupled to a second received IF signal path 372 associated with both GPS receive channel 230 and terrestrial receive channel 224, as will be further described below.

Routing mechanism 370 can be an IF switch to selectively route either the IF signal in path 368, or an IF signal in path 372, to a common output received IF path 374 coupled to an output of the switch. When satellite receive communication is desired, switch 370 routes the IF signal in path 368 to common output path 374, and thus, to a common IF BPF 376. BPF 376 can be a SAW filter. IF BPF 376 has a frequency bandwidth compatible with the frequency bandwidth of the satellite signal to be filtered thereby. Also, BPF 376 has a frequency bandwidth compatible with a frequency bandwidth of the received terrestrial signal to be filtered thereby.

For example, BPF 376 has an approximate bandwidth of 1.5 MHz for a cdma2000 1x signal (having an approximate bandwidth of 1.25 MHz), 5 MHz for a WCDMA signal (having an approximate bandwidth of 4.96 MHz), and 4 MHz for a cdma2000 3x signal (having an approximate bandwidth of 3.75 MHz) (alternatively, a 5 MHz bandwidth IF filter can be used to filter both the WCDMA and cdma2000 signals). BPF 376 provides a filtered IF signal to an IF AGC amplifier 378. AGC amplifier 378 provides an amplified IF signal to an AGC combining amplifier 380. AGC combining amplifier 380 provides an IF signal 381 to baseband processor 310 via a common IF signal path 382. All of the above mentioned received IF signal processing components and associated IF received signals are preferably, though not necessarily, differential.

*D. GPS Receive Channel*

In GPS receive channel 230, antenna 210 provides GPS RF received signal 232 to an RF GPS receive section, including an RF BPF 386, and an LNA 388. BPF 386 filters interference, such as image band frequencies, and terrestrial PCS and/or cellular signals, from GPS RF received signal 232, so as to avoid over driving LNA 388. When in the GPS receive mode, satellite transmit channel 214 can be deactivated to further reduce interference. BPF 386 provides a filtered RF GPS signal to GPS LNA 388. LNA 388 provides an amplified GPS RF signal to a mixer 390.

Mixer 390 frequency down-converts the GPS RF signal to a GPS IF signal 392. Mixer 390 provides IF signal 392 to second IF signal path 372 (discussed above in connection with satellite receive channel 216), and thus, to the second input of IF switch 370. When GPS receive is desired, switch 370 routes IF signal 392 to common BPF 376, AGC amplifier 378, AGC combining amplifier 380, and thus, to BBP 310.

*E. Terrestrial Receive Channel*

In terrestrial receive channel 226, common antenna 208 provides terrestrial received RF signal 228 (corresponding to terrestrial signals 124/126) to duplexer 346. Duplexer 346 provides the terrestrial received RF signal to a terrestrial receive channel RF section, including the following, serially connected, RF signal processing components: an LNA 396; an RF BPF 398; and a selective RF signal routing mechanism 400. Routing mechanism 400 can be an RF switch to selectively route an RF signal at an input of the switch to either of a first RF signal output path 402 or a second RF signal output path 404, based on a select control signal (not shown) provided to the RF switch.

*1. Terrestrial Receive Analog Sub-Channel*

Terrestrial receive channel 226 includes a first sub-channel associated with first switched RF output path 402. In one embodiment, this first sub-channel can receive and process cellular analog signals, such as AMPS signals. In a cellular analog mode, RF switch 400 provides a switched RF signal to path 402, and thus, to a mixer 406 in the first sub-channel. Mixer 406 frequency down-converts the switched RF signal to an IF signal 408 based on LO reference signal 326 provided to mixer 406. Mixer 406 provides IF signal 408 to a BPF 410, which can be a SAW filter. BPF 410 has a frequency bandwidth compatible with a frequency bandwidth of the cellular FM receive signal it is to filter. BPF 410 provides a filtered IF signal to an IF AGC amplifier 412, and amplifier 412 provides an amplified IF signal to AGC combining amplifier 380. AGC combining amplifier 380 provides an amplified IF signal (represented by IF signal 381) to baseband processor 310. When RF switch 400 and IF switch 370 are positioned as depicted in FIG. 3, WCD 102 can concurrently receive and process terrestrial analog signals and satellite signals.

*2. Terrestrial Receiver Digital Sub-Channel*

Terrestrial receive channel 226 also includes a second sub-channel associated with second switched RF output path 404. In one embodiment, the second sub-channel receives and processes cellular CDMA or TDMA digital signals. In a digital cellular mode, RF switch 400 provides a switched RF signal to signal path 404, and thus, to a mixer 414 in the second sub-channel. Mixer 414 frequency down-converts the switched RF signal to a received IF signal 416. Mixer 414 provides IF signal 416 to IF receive path 372, and thus, to the second input of IF switch 370. In the digital cellular mode, switch 370 routes IF signal 416 to output path 374, and thus, to BPF 376, AGC amplifier 378, and AGC combining amplifier 380.

As described above, terrestrial receive channel 226, satellite receive channel 216, and GPS receive channel 230 share common differential IF signal paths and IF components. Such an arrangement advantageously reduces cost, and receiver space and power requirements. This is especially advantageous in hand-held mobile applications.

RF switches 400 and differential IF switches 316 and 370 in the transmit receive paths can be implemented using diodes, transistors, Field Effect Transistors (FETs), mechanical relays, and/or other switching devices. Alternate arrangements replace the differential switches with differential power splitters and differential power combiners. Additionally, the terrestrial and satellite receive channels can be combined using a differential diplexer in cases where the intermediate frequencies are different.

*F. Local Oscillators*

WCD 102 includes a reference signal source 417 to produce LO reference signal 326. In one embodiment, signal source 417 is a dual-band frequency synthesizer, such as a dual-band phase locked loop (PLL). Signal source 417 provides an LO output to one or more power splitters (not shown) so as to provide reference signal 326 to a respective LO input of each of mixers 322, 334, 390, 406 and 414. Therefore, signal source 417 provides the LO reference signal to satellite transmit channel 214, terrestrial transmit and receive channels 224 and 226, and GPS receive channel 230.

WCD 102 also includes a second reference signal source 418, which can be a frequency synthesizer/PLL, to produce LO reference signal 364. Thus, second signal source 418 provides LO reference signal 364 to satellite receive channel 216. In the present invention, signal sources 417 and 418 are independently controlled such that respective frequencies of LO reference signals 326 and 364 are correspondingly independently controlled. This is in contrast to some known transceivers having transmit and receive LO signal sources that produce transmit and receive reference signals having frequencies dependant on one another.

In the present embodiment, independent control of signal sources 417 and 418 advantageously accommodates different transmission and reception frequency spectrum allocations associated with different geographical regions of the Earth. For example, a first country may allocate a satellite receive frequency spectrum from 2480 to 2490 MHz, and a satellite transmit frequency spectrum from 1615 to 1617 MHz. A second country may allocate differently. For example, the second country may allocate a satellite receive frequency spectrum from 2485 to 2491 MHz, and a satellite transmit frequency spectrum from 1610 to 1613 MHz. In such circumstances, the present invention gives communication system operators maximum flexibility for global roaming because the different frequency spectrum allocations are easily accommodated using independent transmit and receive LO frequency control. Additionally, the satellite receiver can operate independently and at the same time as the terrestrial receive and transmit channels.

Similarly, independent frequency control of LO signal sources 417 and 418 can allow global terrestrial operation of the WCD. For example, sources 417 and 418 can produce respective LO reference signals 326 and 364 having frequencies compatible with terrestrial transmit and receive spectrum allocations in the United States, Japan, Korea, China, and Europe, for example.

*G. Frequency Planning*

WCD 102 has an exemplary transmit IF frequency of 228.6 MHz common to both satellite and terrestrial transmit channels 214 and 216. WCD 102 has an exemplary receive IF frequency of 183.6 MHz, which is 45 MHz below the transmit IF frequency. This 45 MHz frequency offset corresponds to a 45 MHz frequency offset between the cellular transmit and receive frequency bands in the United States. Alternatively, WCD 300 has a second exemplary transmit IF frequency of 130.38 MHz, and a corresponding second exemplary receive IF frequency of 85.38 MHz. Other transmit and receive IF frequency pairs are possible.

In a combined satellite communication and GPS receive mode, WCD 102 communicates with the exemplary LEO CDMA satellite communication system, and can concurrently receive GPS satellite signals. Therefore, satellite receive channel 216 receives satellite down-link signals in the frequency range 2480 - 2500 MHz. Satellite transmit channel 214 transmits satellite uplink signals in the frequency range 1610 - 1622 MHz.

Assuming, for example, a satellite system reverse channel (that is, transmit/uplink) frequency of 1620.42 MHz (or channel 327 in 30 KHz channel step sizes), and the transmit IF frequency of 228.6 MHz, then a frequency of LO reference signal 326 (that is, the satellite transmit LO frequency) can be determined according to the relationships:

satellite transmit LO = 1620.42 - 228.6 MHz = 1391.82 MHz, or alternatively,
satellite transmit LO = 1620.42 - 130.38 MHz = 1490.04 MHz.

Other frequencies of LO reference signal 326 are possible.

In the GPS receive mode, assuming GPS receive channel 230 receives GPS signals having an approximate frequency of 1575.42 MHz, and the received IF signal has the frequency of 183.6MHz, then a frequency of LO reference signal 364 can be determined according to the relationship:

$$\text{GPS frequency} - \text{satellite transmit LO frequency} = 1575.42 - 1391.82$$
$$= 183.6 \text{ MHz (receiver IF)}$$

In the terrestrial digital or analog communication mode, WCD 102 can transmit and receive cellular signals. As mentioned above, duplexer 346 is configured to separate cellular transmit signal 227 from cellular received signal 228. In one embodiment, corresponding to the United States cellular spectrum allocations, cellular transmit frequencies (for example, from 825 to 845 MHz) are 45 MHz below corresponding cellular receive frequencies (for example, from 870 to 890 MHz). Therefore, duplexer 346 includes transmit and receive filter sections offset in frequency from one another by 45 MHz, such that the transmit and receive filter sections respectively coincide with the cellular transmit and receive frequencies. In addition, the transmit and receive IF frequencies used in WCD 102 are offset from one another by 45 MHz, to correspond to the 45 MHz frequency offset between the cellular transmit and receive frequencies.

Alternative embodiments can be used with other terrestrial systems, such as PCS, GSM, ETACS, or TACS systems. For example, an exemplary PCS transmit frequency band in the United States can correspond to the cellular frequency range above, or to a PCS only transmit frequency range of 1850 to 1910 MHz. Similarly, an exemplary PCS receive frequency band in the United States can correspond to the cellular frequency range above, or to a PCS only receive frequency range of 1930 to1990 MHz. Alternative embodiments can accommodate different transmit/receive frequency offsets in the other terrestrial systems by appropriately adjusting the transmit/receive IF frequency offset mentioned above, and by using a duplexer having an appropriate, corresponding frequency offset between the receive and transmit filter sections. For example, the alternate embodiments can use IF receive and transmit frequencies different from those mentioned above, as appropriate.

*H. Transceiver Transmit Power Control*

Transmit IF gain controlled amplifier 214 and receive IF AGC amplifiers 378, 380, and 412 can be used for both open and closed loop power control in WCD 102. Open loop power control refers to power control implemented exclusively at WCD 102. On the other hand, closed loop power control refers to power control implemented using, *inter alia*, commands transmitted to WCD 102 by a Gateway, or terrestrial base station, for example. An example of terrestrial communication, CDMA open loop power control is described in U.S. Patent No. 5,056,109, issued to Gilhousen et al.., which is incorporated herein by reference.

*1. Terrestrial Mode Power Control*

In one embodiment, the present invention performs closed loop power control in the terrestrial communication mode using the above mentioned transmit and receive IF AGC amplifiers. The following exemplary process can be used to perform closed loop power control. First, when terrestrial signals 123/126 are received by WCD 102, a gain of each of receive IF AGC amplifiers 412, 378, and 380, can be adjusted such that AGC amplifier 380 provides received IF signal 381 to BBP 310 at an appropriate power level. When IF signal 381 is at the appropriate power level, WCD 102 can properly demodulate the received signal and can estimate a received signal power level.

Next, a gain of transmit IF AGC amplifier 314 is adjusted such that a power level of transmit RF signal 226, for example, is a predetermined amount below the estimated received signal power level. This transmit power level can be further adjusted, for example, increased or decreased, based on transmit power correction data transmitted to WCD 102 by a terrestrial base station. In one embodiment, the gain of gain controlled amplifier 314 is adjusted such that the transmit power level of RF signal 226 is 73 decibels (dB) higher than the received power level.

Closed loop power control can be implemented in accordance with the following equation:

$$\text{Mean Transmit Output Power} = k - \text{Mean Received Power} + 0.5*\text{NOM\_PWR} + 0.5*\text{INIT\_PWR} + \text{sum of all access probe power corrections} + \text{sum of all closed loop power control corrections.}$$

Where:

NOM_PWR and INIT_PWR are system parameters (nominal and initial power) each normally set at 0 dB. The access probe power and the closed loop power control corrections are data received from the base station related to power levels for signals from user terminals or mobile stations requesting system access, and closed loop received signal power level indications, respectively.

Parameter k is a Turn-Around constant given by the following equation:

$$k = (Pt)_c - 134 + (NF)_c + 10 \cdot Log(1 + \zeta_1 + \zeta_2) - 10 \cdot Log(1 - X)$$

Where:

$(Pt)_c$ is the base station transmit power,

$(NF)_c$ is the base station receiver noise figure,
$\zeta_1$, and $\zeta_2$ are interference power ratios from other base stations, and
$X$ is a cell loading factor.

Normally the Turn-Around constant $k$ is -73 dB.

*2. Satellite Mode Power Control*

The satellite communication mode generally uses a power control mechanism different from that used in the terrestrial communication mode. In this case, the power level of transmitted uplink signal 112 may be independent of the power level of the received down-link signal 110. The power level of the transmitted signal is generally controlled by gateway 114. Gateway 114 commands WCD 102 to increase or decrease the power level of uplink signal 110, such that gateway 114 receives the uplink signal (transmitted by the WCD) at a predetermined or desired power level. However, WCD 102 could also use the power level of received signals as a basis to adjust its relative transmit power.

*I. Baseband Processing Functions*

*1. Transmit Direction*

A user of WCD 102 can provide audio input to the WCD using a microphone 420. Microphone 420 provides an analog audio signal 422 to an audio processor 424. Audio processor 424 digitizes and process the audio signal, to produce a digital audio transmit signal. Audio processor 424 provides the digital audio transmit signal to a controller and memory 428 over a bi-directional digital bus 430. Controller and memory 428 couples the digital audio transmit signal to a user modem 432 over a second bi-directional digital bus 434. Modem 432 modulates the digital audio transmit signal in accordance with a selected transmit mode (for example, in accordance with the satellite transmit mode or the terrestrial transmit mode) to produce a modulated, digital baseband transmit signal 436. Signal 436 can include both an I (in-phase) and a Q (quadrature component. Audio processor 424, controller and memory 428, and modem 432, collectively form a Digital Baseband Section (DBS) of WCD 102.

Modem 432 provides digital baseband transmit signal 436 to a baseband input 438 of BBP 310. Baseband input 438 provides the digital baseband transmit signal to a Digital-to-Analog Converter (DAC) 440. DAC 440 converts digital baseband transmit signal 436 to an analog baseband transmit signal. DAC 440 provides the analog baseband transmit signal to a mixer 442. Mixer 442 frequency up-converts the analog baseband transmit signal to IF transmit signal 312 based on a reference signal 444a provided to mixer 442.

*2. Receive Direction*

In the receive direction, AGC combining amplifier 380 provides received IF signal 381 to a mixer 446 of BBP 310. Mixer 446 frequency down-converts received IF signal 381 to produce a baseband analog received signal based on a reference signal 444b provided to the mixer. Mixer 446 provides the baseband analog received signal to an Analog-to-Digital Converter (ADC) 448. ADC 448 digitizes the baseband analog received signal to produce a digital baseband received signal 450. Signal 450 can include both an I (in-phase) and Q (quadrature) component. BBP 310 provides digital baseband received signal 450 to user modem 432. User modem 432 demodulates the digital baseband received signal 450 to produce a demodulated digital signal. Modem 432 provides the demodulated digital signal to controller and memory 428 over digital bus 434. Controller and memory section 428 couples the demodulated digital signal to audio processor 424 over digital bus 430. Audio processor 424 converts the demodulated digital signal to an analog signal 452. Audio processor 424 provides analog signal 452 to a speaker 454.

*3. Baseband Processor*

A more detailed view of a baseband processor 310' used in CDMA and FM type communication systems or signal processing and useful for implementing embodiments of the present invention is shown in FIG. 3b. In FIG. 3b, a user modem 387' receives I and Q component RX data signals 450a and 450b, respectively, and provides I and Q component TX data signals 436a and 436b, respectively.

For transmission, signals 436a and 436b are input to DAC elements 440a and 440b respectively, which provide analog signal outputs to Low Pass Filters and mixers 442a and 442b, respectively. Mixers 442a and 442b up-convert the signals to the appropriate IF frequency and input them to a summer 316 to provide a summed differential TX IF output signal 312, which is further processed as shown in the figures. A phase splitter 458 is connected to receive input from the TX IF synthesizer to provide a synthesizer input 444a to mixer 442a and a 90 degree out of phase synthesizer input 444c to the other mixer 442b, of the two mixers.

For FM signal processing a switch element 441 connected in series with DAC 440b transfers the analog signal to a filter and then the TX IF synthesizer for use as analog baseband for frequency modulation.

For signal reception, common IF signal 381 is input to a splitter 384 which provides inputs to each of two mixers 446a and 446b for down-conversion and which in turn provide their respective baseband analog outputs to low pass filters and Analog-to-Digital Converters or ADC elements 448a and 448b, respectively. A phase splitter 456 is connected to receive input from the RX IF synthesizer to provide a synthesizer input 444b to mixer 446a and a 90 degree out of phase synthesizer input 444d to the other mixer 446b. Both phase splitters 456 and 458 can further include a "divide-by" function to divide the input frequency by a factor of 2 or more, as desired, to generate an appropriate mixer input frequency dependent upon the pre-selected output frequency of the respective IF synthesizer.

The ADC elements 448a and 448b digitize the signals appropriately and provide an I (in-phase) RX data signal 450a and a Q (quadrature) RX data signal 450b, which are then processed by the user modem as shown in the figures.

*4. Transceiver Controller and Mode Control*

The user can provide information and mode control commands to WCD 102 to configure the WCD to operate in different operating modes (mentioned above, and further described below), or these modes can be selected based on preset service provider or manufacturer supplied information or criteria. For example, such a mode select signal can be provided as a result of a manual user input in which a particular mode is selected, or as part of processing pre-selected or pre-stored commands or method steps which cause the selection of mode based on certain values or criteria such as current signal quality, service or feature availability, cost, or desire for location information on a periodic basis. The user, or a provider, provides such mode control information to controller and memory 428 (also referred to as controller 428) through an Input/Output (I/O) interface 460. In response to the mode control information provided by the user, controller 428 correspondingly configures user modem 432 and transceiver channels 214, 216, 224, 226, and 230.

Controller 428 configures the transceiver channels using a plurality of control lines/signals collectively represented by a transceiver mode control bus 462 coupled between controller 428 and the transceiver channels. Transceiver mode control bus 462 provides a switch select control signal to each of signal routing switches 316, 400, and 370. Therefore, controller 428 can control these routing switches, in accordance with a selected operating mode, to thereby configure the WCD operating mode.

Transceiver mode control bus 462 also includes power-on and power-off control lines to activate and deactivate sections of the various transceiver channels in accordance with the mode control commands received through I/O interface 460.

Controller 428 also provides frequency tuning commands to signal sources 417 and 418, to respectively control the frequencies of reference signals 326 and 364. The frequency tuning commands can be provided to signal sources 417 and 418 using the transceiver mode control bus, or using a separate, dedicated tuning control bus.

Controller 428 also controls satellite and terrestrial call set-ups (establishment or activations) and tear-downs (inactivations or terminations), in accordance with user commands and information entered through I/O interface 460. Accordingly, controller 428 can implement the satellite and terrestrial call processing protocols necessary to effect the call set-ups and tear-downs.

As mentioned above in connection with FIG. 2, the user can configure WCD 102 to operate in at least one of the following operating modes:

1. the satellite communication mode for communicating with the satellite communication system using satellites 108;
2. the terrestrial analog communication mode for communicating with the terrestrial analog communication system;
3. the terrestrial digital communication mode for communicating with the terrestrial digital communication system; and
4. the GPS receive mode for receiving and processing GPS satellite signals and to determine a GPS position of the WCD.

When the satellite communication mode (mode 1) is selected, controller 468 configures transmit IF routing switch 316 to route the output of IF AGC amplifier 314 to output path 318 (that is, switch 316 is configured to be in a position opposite to the position depicted in FIG. 3a). Also, receive IF switch 370 is configured to route signals from input IF path 368 to output IF path 374, as depicted in FIG. 3a.

When the terrestrial analog communication mode (mode 2) is selected, controller 468 configures transmit IF routing switch 316 to route the IF output of AGC amplifier 314 to output IF path 319, as depicted in FIG. 3. Terrestrial receive RF switch 400 is configured to route signals at the switch input to output RF path 402, and thus, to the analog sub-channel, as depicted in FIG. 3a. Also, receive IF routing switch 370 can be configured to route IF signals from receive IF path 372 to output IF path 374, but the gain can be zero on this path since a digital signal is not desired. Alternatively, switch 370 is configured to be in a position between paths 368 and 372, so that neither satellite nor digital cellular are selected.

When the terrestrial digital communication mode (mode 3) is selected, controller 468 configures transmit IF routing switch 316 as depicted in FIG. 3a. On the other hand, terrestrial receive RF switch 400 is configured to route signals at the switch input to output RF path 404, and thus, to the digital sub-channel. Also, receive IF routing switch 370 is configured to route IF signals from receive IF path 372 to output IF path 374 (that is, switch 370 is configured to be in a position opposite to the position depicted in FIG. 3a).

When the GPS receive mode (mode 4) is selected, controller 468 configures receive IF routing switch 370 to route IF signals from receive IF path 372 to output IF path 374 (that is, switch 370 is configured to be in a position opposite to the position depicted in FIG. 3a). In addition controller 428 can deactivate transmit channels 214 and 216 to reduce interference introduced into GPS channel 230 by the transmit channels.

### III. Concurrent Satellite Receive and GPS Receive Embodiment

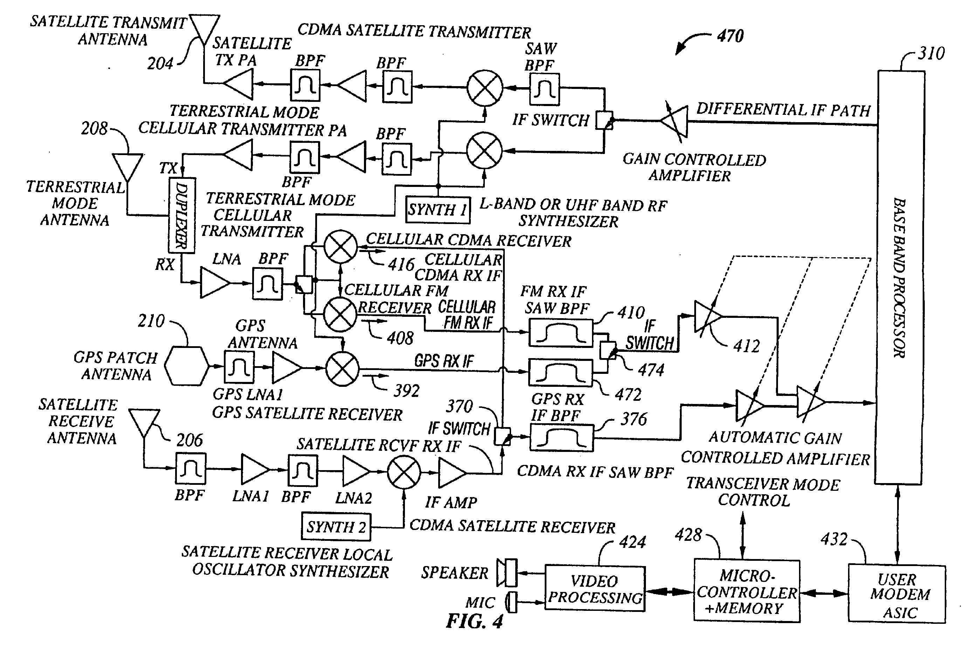

In WCD 102 described above, GPS receive channel 230 and satellite receive channel 216 generally operate in a mutually exclusive manner because receive IF routing switch 370 selects between these two channels, depending on the selected receive mode. FIG. 4 is a block diagram of a WCD 470 according to another embodiment, wherein GPS receive channel 230 and satellite receive channel 216 can operate simultaneously.

WCD 470 is similar to WCD 102, except that GPS received IF signal 392 is provided to a GPS receive IF BPF 472 instead of IF routing switch 370. In WCD 470, GPS receive IF BPF 472 provides a filtered GPS IF signal to an IF switch 474. IF switch 474 also receives the IF received signal output by BPF 410. Therefore, IF routing switch 474 selects between either the GPS received signal or the terrestrial received IF signal, and provides the selected signal to AGC amplifier 312.

### IV. Satellite Transceiver and GPS Only, First Embodiment

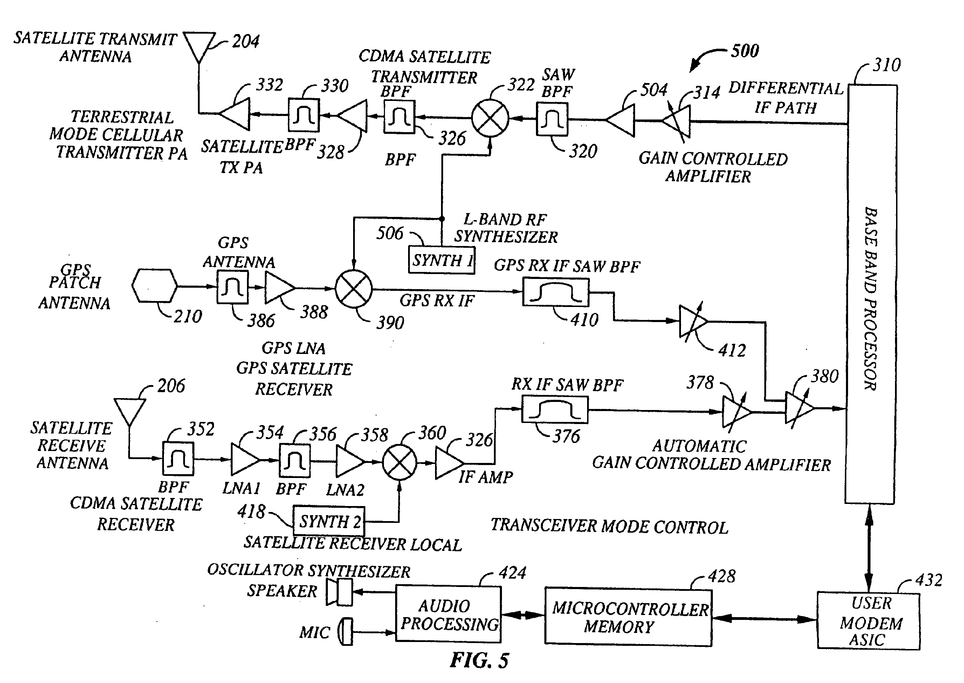

FIG. 5 is a block diagram of a WCD 500 according to another embodiment. WCD 500 includes only satellite transmit and receive channels 214 and 216, and GPS receive channel 230. WCD 500 is similar to WCD 102, except terrestrial transmit and receive channels 224 and 226, and associated transmit and receive routing switches 316 and 370 are omitted. Thus, WCD 500 is simpler, more compact, lighter, less expensive, and more power efficient than the above described embodiments. Also, WCD 500 can simultaneously receive and process GPS and satellite communication receive signals.

Further differences between WCD 500 and WCD 102 include a transmit IF amplifier 504 coupled between transmit IF gain controlled amplifier 314 and IF BPF 320, and a reference signal source 506. Reference signal source 506 can be a single band signal source, since the terrestrial communication channels are omitted.

### V. Satellite Transceiver and GPS Only, Second Embodiment

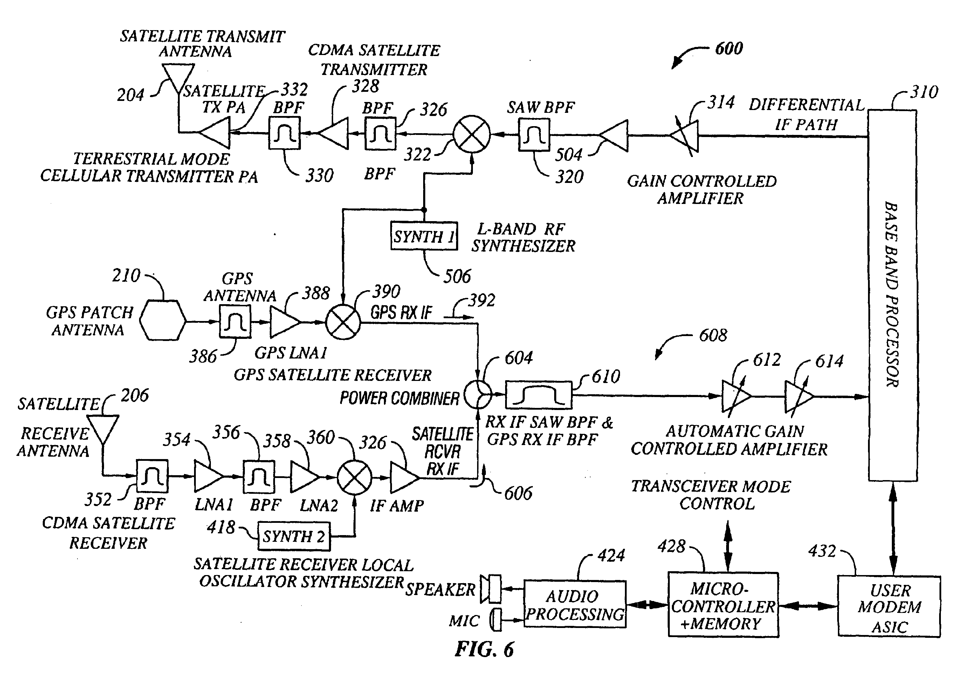

FIG. 6 is a block diagram of a WCD 600 according to still another embodiment. WCD 600 is similar to WCD 500, except that a power combiner 604, instead of IF AGC amplifier 380 (see FIG. 5), combines GPS receive IF signal 392 produced by mixer 390 with a satellite communication receive IF signal 606 produced by receive IF amplifier 326. Power combiner 604 provides a combined signal to a common IF path/section 608, including, in series, a receive IF BPF 610, and first and second receive IF AGC amplifiers 612 and 614.

### VI. Satellite Assisted GPS Method

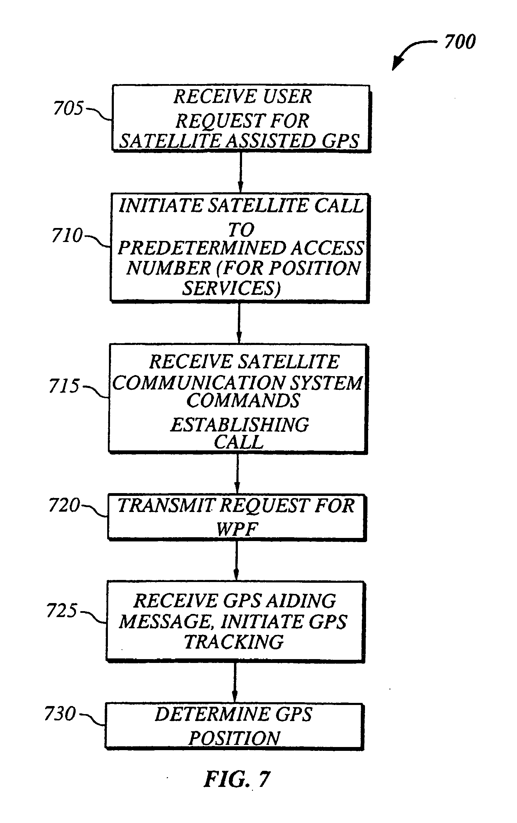

FIG. 7 is a flow chart of an example method 700 of concurrently operating a WCD (for example, WCD 102, or the other WCD embodiments described above) in both the satellite communication and GPS receive modes to quickly establish a GPS based position of the WCD. This is referred to as "satellite assisted GPS." Method 700 represents a series of method steps performed by WCD 102.

A user of WCD 102 can initiate method 700 by entering a request for satellite assisted GPS (that is, a request for a position determination) into WCD 102, using I/O interface 460, for example. At a first step 705, WCD 102 receives the user request for satellite assisted GPS.

Alternatively, satellite assisted GPS mode can be selected automatically at periodic intervals in response to a user command, as a communication service, or in response to commands from service provider as a specific feature provided to one or more communication system users.

In response to the request for satellite assisted GPS, at a next step 710, WCD 102 activates satellite transceiver 212 to initiate a satellite call to a predetermined access number in the satellite communication system. WCD 102 transmits a call setup request, also referred to as access probes, to gateway 114 of the satellite system using uplink signal 112.

The predetermined access number corresponds to a request for WCD position/location services.

Gateway 114 receives the call setup request from WCD 102 and recognizes the predetermined number associated with a request for WCD location services. In response, gateway 114 establishes a call with WCD 102. For example, gateway 114 commands WCD 102 to use a predetermined reverse link channel, using a satellite paging channel, for example.

Correspondingly, at a next step 715, WCD 102 receives the gateway originated commands establishing the satellite call in down-link signal 110.

Once the satellite call is established, at a next step 720, WCD 102 transmits a request to gateway 114 for a satellite system facility referred to as a Wireless Position Function (WPF). The WPF of the satellite system computes an approximate geographic location of WCD 102 based on factors such as the known satellite(s) through which WCD 102 is communicating with gateway 114 (or their positions, and so forth). Techniques for making such a position determination are described in US Patent Nos. 6,107,959 entitled *"Position Determination Using One Low-Earth Orbit Satellite"* which issued August 22, 2000, and 6,078,284 entitled *"Passive Position Determination Using Two Low-Earth Orbit Satellites"* which issued June 20, 2000, and US Patent Serial No. 08/723,725 entitled *"Unambiguous Position Determination Using Two Low-Earth Orbit Satellites,"* which are incorporated herein by reference.

In response to the WPF request, gateway 114 invokes the WPF facility. The WPF facility returns an approximate position of WCD 102 to gateway 114. gateway 114 transmits the approximate position to WCD 102 in a Position (GPS) Aiding message. The GPS Aiding message also includes a list of GPS satellites most probably viewable by WCD 102, based on the approximate position of WCD 102. The list includes information necessary for receiving and processing the GPS signals from each of the listed GPS satellites.

Correspondingly, at a next step 725, WCD 102 receives the GPS Aiding message. In response to the GPS Aiding message, WCD 102 discontinues the satellite call. Then, WCD 102 activates GPS receiver 230 and initiates an independent GPS location tracking to identify GPS satellites in view of the WCD, based on the list of GPS satellites in the GPS Aiding message. This is also referred to as GPS satellite signal search, acquisition, and track.

Once GPS location tracking is complete, at a next step 730, WCD 102 operates as a stand-alone GPS receiver to determine GPS positions of the WCD.

GPS satellite signal search, acquisition, and track can disadvantageously take over ten minutes without the GPS Aiding message. However, in the present invention, the list of GPS satellites and associated information (for example, ephemeris data) in the GPS Aiding message enables WCD 102 to substantially reduce this time to less than thirty seconds.

In an alternative embodiment, at step 705, the user can request an emergency position location service using an "E911" satellite call. During such a call, WCD 102 alternates between GPS receive and satellite transmit modes so as to maintain the satellite call. Therefore, the E911 method is similar to method 700 described above, except the satellite call is maintained throughout the method, and while WCD 102 is determining a position based on received GPS satellite signals. WCD 102 powers OFF the GPS receive channel when transmitting to the satellite communication system, then powers OFF the satellite transmit channel when receiving GPS signals. However, the satellite receive channel remains active throughout. In this manner WCD 102 can perform GPS position location tracking and maintain a LEO satellite voice/data link. During the E911 call, the WCD continually transmits a WCD position update information to the Gateway. Then, the Gateway can provide this information, and GPS timing information, to the WPF for differential GPS location fixing. This method can fix an emergency caller's (that is, user's, user terminal, or wireless device) location to within a few meters 90% of the time and can maintain a voice/data communication link with the caller.

Some of the many Applications of the present invention would be:

1. Location Sensitive Billing for LEO satellite Service Providers.
2. Location Sensitive Billing for Cellular Service Providers.
3. Personal Position and Location Tracking independent of terrestrial network coverage.
4. Global Position Tracking and Communication.
5. Fleet Management and Dispatch service on Land or Sea.
6. Fraud Management.
7. Global Network Optimization for LEO satellite System and terrestrial Systems including system interoperability.
8. Personal Security Response.
9. Large Scale Search and Rescue with region, and nation coverage during natural disasters.
10. Coordination of Disaster Relief after Earth Quakes, Hurricanes, Typhoons, Fire, and Industrial Accidents.
11. Roadside Assistance on a Continental Scale.
12. Stolen Vehicle recovery.
13. All Emergencies.
14. Emergency Rescue in Remote Locations: Mountains, Deserts, Jungles, and at Sea.
15. Small Handheld Global Personal Communications Device.

16. Urban and Rural area communications service in one handheld device.

17. Global Data Communications device.

18. Position location and tracking when WCD 102 is used as a remote data collection terminal.

19. Handheld mobile military command, communication control and tracking of troops in the field.

20. National intelligence operations support giving operatives global communication, position location, and extraction.

21. Federal Bureau of Investigation of communication and tracking of agents in the field.

22. Law enforcement communication and location service.

### VII. Conclusion

While various embodiments of the present invention have been described above, it should be understood that they have been presented by way of example, and not limitation. It will be apparent to persons skilled in the relevant art that various changes in form and detail can be made therein without departing from the spirit and scope of the invention.

The present invention has been described above with the aid of functional building blocks illustrating the performance of specified functions and relationships thereof. The boundaries of these functional building blocks have been arbitrarily defined herein for the convenience of the description. Alternate boundaries can be defined so long as the specified functions and relationships thereof are appropriately performed. Any such alternate boundaries are thus within the scope and spirit of the claimed invention. One skilled in the art will recognize that these functional building blocks can be implemented by discrete components, application specific integrated circuits, processors executing appropriate software and the like or any combination thereof. Thus, the breadth and scope of the present invention should not be limited by any of the above-described exemplary embodiments, but should be defined only in accordance with the following claims and their equivalents.

### FURTHER SUMMARY OF THE INVENTION

1. A multi-mode transceiver for a Wireless Communication Device (WCD), comprising:

a first transmit channel to produce a first Radio Frequency (RF) transmit signal compatible with a first communication system;
a first receive channel to receive a first RF receive signal from the first communication system; and
a second receive channel to receive a second RF receive signal from a satellite positioning system and usable for deriving a position of the WCD, wherein the first and the second receive channels share a common receive path.

2. The transceiver of 1, wherein the satellite positioning system is the Global Positioning System (GPS).

3. The transceiver of 1, wherein the first communication system is one of a satellite communication system, a terrestrial cellular communication system, and a terrestrial Personal Communication Service system.

4. The transceiver of 1, wherein the first receive channel comprises:

a first mixer to frequency down-convert the first RF receive signal to a first Intermediate Frequency (IF) signal based on a first reference signal; and
a first IF section following the first mixer.

5. The transceiver of 4, wherein the second receive channel comprises:

a second mixer to frequency down-convert the second RF receive signal to a second IF signal based on a second reference signal; and
a second IF section, separate from the first IF section, following the second mixer.

6. The transceiver of 5, wherein the common receive path comprises a common receive IF path, the first and the second receive channels further including a signal routing mechanism to route the first and the second IF signals from the respective first and second separate IF sections to the common receive IF path.

7. The transceiver of 5, further comprising:

a first Local Oscillator (LO) to produce the first reference signal at a first frequency; and
a second Local Oscillator (LO) to produce the second reference signal at a second frequency independent of the first frequency.

8. The transceiver of 1, further comprising:

a second transmit channel to produce a second RF transmit signal compatible with a second communication system, wherein the first and the second transmit channels share a common transmit path.

9. The transceiver of 8, wherein the first transmit channel comprises: a first IF section to process a first IF signal; and a first mixer following the first IF section to frequency up-convert the first IF signal to a first RF signal based on a first reference signal.

10. The transceiver of 9, wherein the second transmit channel comprises:

a second IF section to process a second IF signal; and
a second mixer, separate from the first mixer, following the second IF section to frequency up-convert the second IF signal to a second RF signal based on a second reference signal.

11. The transceiver of 10, wherein the common transmit path comprises a common transmit IF path, the first and the second transmit channels including a common signal routing mechanism to route the first and the second IF signals from the common transmit IF path to the first and the second separate mixers, respectively.

12. The transceiver of 1, further comprising:

a third receive channel to receive a third RF receive signal from the second communication system.

13. The transceiver of 12, wherein the third receive channel includes:

a mixer to frequency down-convert the third RF receive signal to an IF signal based on a first reference signal; and
an IF section to receive and process the IF signal, wherein the IF section shares a common receive IF path with at least one of the first and the second receive channels.

14. The transceiver of 12, wherein the second communication system includes one or more terrestrial communication systems capable of transmitting a first signal modulated using a digital modulation technique and a second signal modulated using an analog modulation technique, the third receive channel including:

a first sub-channel to receive the first signal modulated using the digital modulation technique; and
a second sub-channel to receive the second signal modulated using the analog modulation technique.

15. The transceiver of 14, further comprising a routing mechanism to selectively route the first signal to the first sub-channel and the second signal to the second sub-channel.

16. A Quad-mode Wireless Communication Device (WCD), comprising:

a satellite transceiver including a satellite transmit channel and a satellite receive channel for communicating with a satellite communication system;
a terrestrial transceiver including a terrestrial transmit channel and a terrestrial receive channel for communicating with one of a cellular system and a Personal Communication Service (PCS) system, wherein the satellite and the terrestrial transmit channels share a common transmit path; and
a Global Positioning System (GPS) receive channel to receive GPS signals from one or more GPS satellites, from which a position of the WCD can be determined, wherein at least one of the satellite and terrestrial receive channels shares a common receive path with the GPS receive channel.

17. The WCD of 16, wherein the terrestrial transceiver is adapted to selectively communicate with one of:

(a) a Code Division Multiplex Access (CDMA) cellular system; and
(b) an analog cellular system.

18. The WCD of 16, wherein the satellite and the terrestrial transmit channels each comprise:

an Intermediate Frequency (IF) section to produce an IF signal; and
a mixer following the IF section to frequency up-convert the IF signal to a Radio Frequency (RF) signal based on a Local Oscillator (LO) reference signal, wherein the IF sections of the satellite and the terrestrial transmit channels share a common transmit IF path.

19. The WCD of 16, wherein the satellite and the terrestrial receive channels each comprise:

a mixer to frequency down-convert a received Radio Frequency (RF) signal to an IF signal based on a first Local Oscillator (LO) reference signal; and
an Intermediate Frequency (IF) section to receive and process the IF signal, wherein the IF sections of the satellite and the terrestrial receive channels share a common receive IF path.

20. The WCD of 19, wherein the GPS receive channel comprise:

a mixer to frequency down-convert a received GPS RF signal to an GPS IF signal based on a second LO reference signal; and
an IF section to receive and process the GPS IF signal, wherein the IF sections of the GPS receive channel, the satellite receive channel, and the cellular receive channel share a common IF signal path.

21. A method of determining a position of Wireless Communication Device (WCD), the WCD including a transceiver capable of communicating with a satellite communication system, and receiving signals from a satellite positioning system indicative of a position of the WCD, comprising:

(a) receiving an initial request for a position determination;
(b) transmitting a call set-up request to the satellite communication system in response to the initial request, the call set-up request including a predetermined position services access number;
(c) receiving call set-up information from the satellite communication system to establish the call with the satellite communication system;
(d) receiving a Position Aiding message from the satellite communication system, the Position Aiding message being based on an approximate position of the WCD and including information relating to satellites in the satellite positioning system;
(e) receiving signals from satellites in the satellite positioning system; and
(f) determining a WCD position based on step (e) and the information in the Position Aiding message.

22. The method of 21, wherein the satellite positioning system is the Global Positioning System (GPS), and step (e) comprises receiving GPS signals from a plurality of GPS satellites.

23. The method of 21, further comprising, between steps (d) and (e), the steps of:

deactivating a receive channel of the satellite transceiver; and
discontinuing the call with the satellite communication system.

24. The method of 21, further comprising the step of maintaining the call with the satellite communication system while determining the WCD position in step (f).

25. A multi-mode transceiver for a Wireless Communication Device (WCD), comprising:

means for producing a first Radio Frequency (RF) transmit signal compatible with a first communication system;
means for receiving a first RF receive signal from the first communication system; and
means for receiving a second RF receive signal from a satellite positioning system and usable for deriving a position of the WCD, wherein the first and the second means for receiving share a common receive path.

26. The transceiver of 25, wherein the satellite positioning system is the Global Positioning System (GPS).

27. The transceiver of 25, wherein the first communication system is one of a satellite communication system, a terrestrial cellular communication system, and a terrestrial Personal Communication Service system.

28. The transceiver of 25, wherein the first receive channel comprises:

means for down-converting the frequency of the first RF receive signal to a first Intermediate Frequency (IF) signal based on a first reference signal; and
a first IF section following the means for down-converting the first RF receive signal.

29. The transceiver of 28, wherein the second receive channel comprises:

second means for down-converting the frequency of the second RF receive signal to a second IF signal based on a second reference signal; and
a second IF section, separate from the first IF section, following the second means for down-converting.

30. The transceiver of 29, wherein the common receive path is a common receive IF path, the first and the second means for down-converting including means for routing first and the second IF signals from the respective first and second separate IF sections to a common receive IF path.

31. The transceiver of 29, further comprising:

means for producing the first reference signal at a first frequency; and
means for producing the second reference signal at a second frequency independent of the first frequency.

32. The transceiver of 1, further comprising means for producing a second RF transmit signal compatible with a second communication system, wherein the first and the second means for producing RF transmit signals share a common transmit path.

33. The transceiver of 25, further comprising means for receiving a third RF receive signal from the second communication system.

34. The transceiver of 32, wherein the second communication system includes one or more terrestrial communication systems capable of transmitting a first signal modulated using a digital modulation technique and a second signal modulated using an analog modulation technique, comprising:

means for receiving the first signal modulated using the digital modulation technique over a first sub-channel; and
means for receiving the second signal modulated using the analog modulation technique a second sub-channel.

35. The transceiver of 34, further comprising means for selectively routing the first signal to the first sub-channel and the second signal to the second sub-channel.

36. A method of determining a position of at least one Wireless Communication Device (WCD) which includes a transceiver capable of communicating with a satellite communication system and receiving signals from a satellite positioning system indicative of a position of the WCD, comprising the steps of:

receiving an initial request for a position determination;
establishing a call through the satellite communication system in response to the initial request;
receiving a position aiding message from the satellite communication system, the position aiding message being based on an approximate position of the WCD and including information relating to satellites in the satellite positioning system;
receiving signals from satellites in the satellite positioning system; and
determining a WCD position based on satellite positioning system and the information in the position aiding message.

37. The method of 36 wherein said an initial request for a position determination is made in response to preset service provider or WCD manufacturer supplied information or criteria.

38. The method of 37 wherein said an initial request for a position determination is made in response to, one of: a manual WCD user input, while processing pre-selected or pre-stored commands based on certain values or criteria such as current signal quality, service or feature availability, cost; and on a predetermined periodic basis.

39. The method of 38 wherein a WCD the user requests an emergency position location service using an "E911" call.

40. The method of 39 where during such a call said WCD alternates between receiving signals from the satellite positioning system and satellite transmit modes so as to maintain a satellite call.

41. The method of 36 further comprising providing location sensitive billing for satellite communication service providers providing communication services for the WCD.

42. The method of 36 further comprising providing location sensitive billing for Cellular service providers providing communication services for the WCD.

43. The method of 36 further comprising providing personal position and location tracking independent of terrestrial network coverage.

44. The method of 36 further comprising providing fleet management and dispatch service for the WCD.

45. The method of 36 further comprising providing Fraud Management.

46. The method of 36 further comprising providing personal security response for a WCD user.

47. The method of 36 further comprising providing information useful for aiding search and rescue efforts with regional and nation coverage.

48. The method of 36 further comprising providing information for roadside assistance on a continental scale.

49. The method of 36 further comprising providing communications for mobile command and tracking of location of one or more members of predefined groups of personnel at remote locations.

50. The method of 36 further comprising providing communications for vehicle location.

## Claims

1. A Quad-mode Wireless Communication Device (WCD), **characterized by**:

   a satellite transceiver (212) including a satellite transmit channel (214) and a satellite receive channel (216) for communicating with a satellite communication system;
   a terrestrial transceiver (222) including a terrestrial transmit channel (224) and a terrestrial receive channel (226) for communicating with one of a cellular system and a Personal Communication Service (PCS) system, wherein the satellite and the terrestrial transmit channels share a common transmit path; and
   a Global Positioning System (GPS) receive channel (230) to receive GPS signals (232) from one or more GPS satellites, from which a position of the WCD (102) can be determined , wherein at least one of the satellite and terrestrial receive channels (216, 226) shares a common receive path with the GPS receive channel.

2. The WCD of 1, wherein the terrestrial transceiver is adapted to selectively communicate with one of:

   (a) a Code Division Multiplex Access (CDMA) cellular system; and
   (b) an analog cellular system.

3. The WCD of 1, wherein the satellite and the terrestrial transmit channels each comprise:

   an Intermediate Frequency (IF) section to produce an IF signal; and
   a mixer following the IF section to frequency up-convert the IF signal to a Radio Frequency (RF) signal based on a Local Oscillator (LO) reference signal, wherein the IF sections of the satellite and the terrestrial transmit channels share a common transmit IF path.

4. The WCD of 1, wherein the satellite and the terrestrial receive channels each comprise:

a mixer to frequency down-convert a received Radio Frequency (RF) signal to an IF signal based on a first Local Oscillator (LO) reference signal; and

an Intermediate Frequency (IF) section to receive and process the IF signal, wherein the IF sections of the satellite and the terrestrial receive channels share a common receive IF path.

5. The WCD of 4 , wherein the GPS receive channel comprise:

a mixer to frequency down-convert a received GPS RF signal to an GPS IF signal based on a second LO reference signal; and

an IF section to receive and process the GPS IF signal, wherein the IF sections of the GPS receive channel, the satellite receive channel, and the cellular receive channel share a common IF signal path.

6. The WCD of claim 1, **characterized in that** the satellite and terrestrial transmit channels (214, 224) each include base band, IF, and RF signal processing sections to produce an RF transmit signal (218, 227), and to provide the RF transmit signal to an antenna (204;208).

7. The WCD of claim 1, **characterized in that** the satellite receive channel (216) and the terrestrial receive channel (226) each incude RF, IF, and baseband processing sections to process received signal.

*FIG. 1*

FIG. 2

FIG. 3A-1

FIG. 3A-2

310 — BASE BAND PROCESSOR (BBP)
442 — DAC — 440 — 444a
438 — 436
(A)
448 — ADC — 446 — 444b
(B)
450

TRANSCEIVER MODE CONTROL — 462

432 — USER MODEM ASIC
434
428 — MICRO-CONTROLLER +MEMORY — 460
430
452 — AUDIO PROCESSING — 424
SPEAKER — 454
422 — MIC
420

**FIG. 3B**

FIG. 4

**FIG. 5**

EP 1 788 723 A2

BASE BAND PROCESSOR

USER MODEM ASIC

310

314 DIFFERENTIAL IF PATH

600

MICRO-CONTROLLER +MEMORY

432

428

AUDIO PROCESSING

424

614

612

610

608

604

GAIN CONTROLLED AMPLIFIER

504

320

SAW BPF

AUTOMATIC GAIN CONTROLLED AMPLIFIER

RX IF SAW BPF & GPS RX IF BPF

TRANSCEIVER MODE CONTROL

L-BAND RF SYNTHESIZER

SYNTH 1

506

326

322

328

330

332

BPF

BPF

BPF

BPF

SATELLITE TX PA

204

SATELLITE TRANSMIT ANTENNA

CDMA SATELLITE TRANSMITTER

TERRESTRIAL MODE CELLULAR TRANSMITTER PA

GPS RX IF

392

390

GPS LNA1

388

GPS ANTENNA

386

210

GPS PATCH ANTENNA

GPS SATELLITE RECEIVER

SATELLITE RECEIVER POWER COMBINER

606

SATELLITE RCVR RX IF

IF AMP

326

360

358

356

418

SYNTH 2

LNA2

LNA1

BPF

354

206

SATELLITE RECEIVE ANTENNA

352

BPF

CDMA SATELLITE RECEIVER

SATELLITE RECEIVER LOCAL OSCILLATOR SYNTHESIZER

SPEAKER

MIC

*FIG. 6*

700

```
         ┌─────────────────────┐
705 ─────┤   RECEIVE USER      │
         │    REQUEST FOR      │
         │SATELLITE ASSISTED GPS│
         └─────────────────────┘
                   │
                   ▼
         ┌─────────────────────┐
         │INITIATE SATELLITE CALL│
         │        TO           │
710 ─────┤ PREDETERMINED ACCESS│
         │ NUMBER (FOR POSITION│
         │     SERVICES)       │
         └─────────────────────┘
                   │
                   ▼
         ┌─────────────────────┐
         │  RECEIVE SATELLITE  │
715 ─────┤COMMUNICATION SYSTEM │
         │     COMMANDS        │
         │   ESTABLISHING      │
         │       CALL          │
         └─────────────────────┘
                   │
                   ▼
         ┌─────────────────────┐
720 ─────┤ TRANSMIT REQUEST FOR│
         │        WPF          │
         └─────────────────────┘
                   │
                   ▼
         ┌─────────────────────┐
         │  RECEIVE GPS AIDING │
725 ─────┤ MESSAGE, INITIATE GPS│
         │     TRACKING        │
         └─────────────────────┘
                   │
                   ▼
         ┌─────────────────────┐
730 ─────┤   DETERMINE GPS     │
         │     POSITION        │
         └─────────────────────┘
```

*FIG. 7*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 169358 A
- US 5056109 A, Gilhousen
- US 6107959 A
- US 6078284 A
- US 08723725 B